# DEMANDE DE BREVET EUROPEEN

(11) **EP 0 599 705 A1**
(43) Date de publication de la demande: **01.06.1994**
(21) Numéro de dépôt: 93402809.3
(22) Date de dépôt: 19.11.1993
(51) Int. Cl.: G06F 13/40

(54) **Système d'appareils distribués en réseau**

(30) Priorité: 24.11.1992 FR 9214110
(71) Demandeur: BULL S.A., F-92800 Puteaux (FR)
(72) Inventeur: Pauget, Edouard, F-78340 Les Clayes Sous Bois (FR); Mollard, Christian, F-78170 La Celle Saint Cloud (FR)
(74) Mandataire: Gouesmel, Daniel

(57) **Abrégé**

Système d'au maximum N appareils (A, B, C, D,...) distribués en réseau (RE) fonctionnant selon un protocole déterminé (SCSI) où la longueur de tout bus assurant la connexion de plusieurs appareils entre eux (SCSI₁, SCSI₂, SCSI₃) a une valeur maximale donnée, caractérisé en ce que, la distance entre les appareils étant supérieure à la valeur maximale, il comprend une pluralité de bus partiels locaux (SCSI₁ à SCSI₃) reliés entre eux par des liaisons bidirectionnelles (LPP₁, LPP₂) point à point gérés par des dispositifs intermédiaires de transmission (DIT₁, DIT₂₁, DIT₂₃, DIT₃) dont chacun est connecté d'une part à un bus partiel et d'autre part à une liaison point à point et intervient dans les phases de prise de contrôle du réseau par tout appareil connecté à l'un quelconque des bus partiels.

Applicable aux réseaux de type SCSI.

## Description

La présente invention concerne un système d'au maximum N appareils distribués en réseau fonctionnant selon un protocole déterminé où la longueur de tout bus assurant la connexion de plusieurs appareils entre eux a une valeur maximale donnée. Elle est plus particulièrement applicable à un réseau fonctionnant selon un protocole dit SCSI où la longueur maximale spécifiée d'un bus est limitée.

On entend ici par appareil, tout équipement utilisant un bus SCSI comme moyen de communication avec d'autres équipements. Dans la suite de l'exposé on désigne par appareil SCSI ou appareil un tel équipement.

Le protocole de type SCSI est utilisé pour des liaisons de transmission reliant entre eux des appareils SCSI, (par exemple, ordinateurs, périphériques, etc...). Un tel protocole est normalisé aussi bien à l'ANSI (X3T9.2)qu'à l'I.S.O. (ces deux sigles signifiant respectivement American National Standard Institute et International Standard Organization).

Selon ce protocole, le support physique de transmission de la liaison est constitué par un bus, de type parallèle.

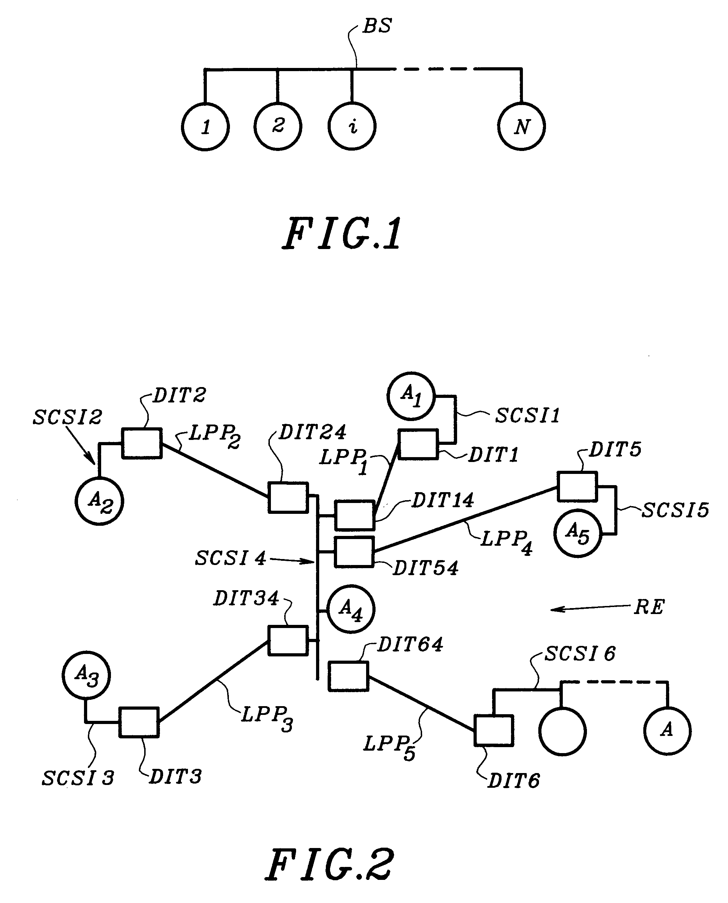

La figure 1 représente un tel bus BS auquel sont connectés au maximum N appareils SCSI, ici numérotés de 1 à N.

La tendance du développement des systèmes informatiques conduit à utiliser, dans un même système, de plus en plus de stations, de terminaux, d'unités centrales, de périphériques. Pour relier entre eux ces différents éléments qui sont souvent éloignés les uns de autres, on connecte ceux-ci à un même réseau. On est souvent conduit de la sorte, à disposer des périphériques d'ordinateur tels que des mémoires à disques à des distances largement supérieures à la longueur maximum du bus BS.

La présente invention permet de relier entre eux une pluralité d'appareils SCSI en constituant un système distribué en réseau, où la norme SCSI concernant la longueur maximale des bus est respectée. Pour ce faire, on utilise un pluralité de bus partiels dont chacun a une longueur maximale autorisée par la norme.

Selon l'invention, le système de au maximum N appareils distribués en réseau fonctionnant selon un protocole déterminé où la longueur de tout bus assurant la connexion de plusieurs appareils entre eux a une valeur maximale donnée, est caractérisé en ce que, la distance entre les appareils étant supérieure à la valeur maximale, il comprend une pluralité de bus partiels locaux reliés entre eux par des liaisons bidirectionnelles point à point et gérés par des dispositifs intermédiaires de transmission dont chacun est connecté d'une part à un bus partiel et d'autre part à une liaison et intervient dans les phases de prise de contrôle du réseau par tout appareil SCSI connecté à l'un quelconque des bus partiels et qui est affecté d'un degré de priorité déterminé pour la prise de contrôle des bus partiels.

D'autres caractéristiques et avantages de la présente invention apparaîtront dans la description suivante donnée à titre d'exemple non limitatif et en se référant aux dessins annexés.

Sur ces dessins :
- la figure 1 rappelle comment est constitué un bus de type SCSI suivant la norme,
- la figure 2 montre les différents éléments constitutifs essentiels du système d'appareils SCSI distribués en réseau selon l'invention,
- la figure 3 montre comment est constitué un dispositif intermédiaire de transmission appartenant au système selon l'invention,
- la figure 4 montre un exemple de réalisation particulier d'un système d'appareils SCSI selon l'invention comportant trois bus partiels, cette figure montrant également la progression des signaux d'un bus partiel à l'autre,
- les figures5,6et 7illustrent le fonctionnement dans différents cas du système montré à la figure 4,
- la figure 8 montre quels sont les différents états possibles d'une machine d'état appartenant à un dispositif intermédiaire de transmission tel que ceux de la figure 4, lors de chacun des fonctionnements illustrés aux figure 5, 6 et 7.

On considère la figure 2 qui montre les différents éléments constitutifs essentiels d'un système selon l'invention. Ces éléments sont les suivants :
- les bus partiels SCSI₁ à SCSI₆, dont la longueur maximum est de 25m.
- les appareils SCSI A₁ à A₆, l'appareil A₁ étant connecté au bus SCSI₁, A₂ au bus partiel SCSI₂, A₃ au bus partiel SCSI₃, A₄ au bus partiel SCSI₄, A₅ au bus partiel SCSI₅, A₆,... A_{N} au bus partiel SCSI₆,
- les dispositifs intermédiaires de transmission DIT₁, DIT₂, DIT₃, DIT₅, DIT₆, DIT₁₄, DIT₂₄, DIT₃₄, DIT₅₄, DIT₆₄.
- les liaisons birectionnelles point à point LPP₁ à LPP₅.

Ainsi qu'on peut le voir à la figure 2, le dispositif intermédiaire de transmission DIT₁ est connecté d'une part au bus partiel SCSI₁ et d'autre part à la liaison bidirectionnelle LPP₁. De même DIT₂ est connecté d'une part au bus partiel SCSI₂ et d'autre part à la liaison bidirectionnelle LPP₂. Le dispositif DIT₃ est connecté d'une part à SCSI₃ et d'autre part à la liaison LPP₃, le dispositif DIT₆ au bus partiel SCSI₆ et à la liaison LPP₅, le dispositif DIT₅ au bus partiel SCSI₅ et à la liaison LPP₄. Par ailleurs tous les dispositifs intermédiaires de transmission DIT₁₄, DIT₂₄, DIT₃₄, DIT₅₄, DIT₆₄ sont connectés respectivement au bus partiel SCSI₄ et aux liaisons LPP₁, LPP₂, LPP₃, LPP₄, LPP₅. Chacune des liaisons bidirectionnelles point à point LPP₁ à LPP₅ peut utiliser l'un quelconque des supports de transmission physique capable de transmettre dans les deux directions des signaux de manière fiable et à une cadence de transfert suffisante. Ces supports de transmission peuvent être du type multifilaire, câble coaxial, fibre optique ou autres, où les informations sont transmises en série.

Dans ce réseau, tel que montré à la figure 2, les appareils de type SCSI ont un nombre qui est compris entre deux et N, ainsi que les bus partiels, les liaisons de type LPP ayant un nombre compris entre 1 et N-1. On peut voir également que les dispositifs intermédiaires de transmission sont toujours disposés entre un bus partiel SCSI et une liaison point à point de type LPP.

Du point de vue du bus partiel SCSI₁ et du dispositif de transmission DIT₁, l'appareil A₁ connecté à ce même bus partiel est considéré comme un appareil local, alors que tout autre appareil connecté à n'importe lequel des autres bus partiels, c'est-à-dire SCSI₂ à SCSI₅ est considéré comme un appareil distant. Ainsi, l'appareil A₅ est considéré comme un appareil distant pour le dispositif de transmission DIT₁ et pour le bus partiel SCSI₁.

Tout appareil connecté à l'un quelconque des bus partiels SCSI₁, SCSI₅ a bien entendu exactement le même type que tout appareil connecté à un bus standard de type SCSI. On respecte donc sur chacun des bus partiels SCSI₁ à SCSI₅ la norme SCSI. On rappelle que selon le protocole SCSI, chaque appareil A₁, Aᵢ, ..., A_{N} est identifié par un numéro d'identification utilisé dans les phases d'arbitrage et de sélection prévues par cette norme. En effet, selon la norme, lorsqu'un appareil A quelconque cherche à utiliser un bus SCSI pour communiquer avec un autre appareil Aᵢ, il passe d'abord par une phase d'arbitrage, puis par une phase de sélection (ou de resélection). Lors de la phase de sélection (ou de resélection), la connexion s'établit entre l'appareil A et l'appareil Aᵢ. Le bus SCSI est dit BUSY pendant tout le temps que dure la transaction entre les deux appareils. A la fin de la transaction, le bus SCSI est libéré (d'une manière indiquée dans la norme).

On sait par ailleurs qu'il existe trois types principaux de bus SCSI de type parallèle. Le premier type comporte 8 bits de données et 1 bit de parité, le second type 16 bits de données et 2 bits de parité, le troisième type 32 bits de données et 4 bits de parité. Par ailleurs ces trois types de bus SCSI ont en commun le fait d'avoir chacun 9 bits de contrôle quelle que soit la largeur du bus de données (c'est-à-dire 8, 16, ou 32 bits, ce dernier possédant des bits de contrôle supplémentaires). La nature exacte des bits de contrôle est rappelée en annexe 1.

Un appareil qui a une identité déterminée, par exemple l'identité 7 s'annonce en activant la ligne de données correspondant à son degré de priorité cela l'identifie et lui donne son degré de priorité en même temps. Ainsi un appareil d'identité 7 a le degré de priorité 7 c'est-à-dire le degré de priorité le plus élevé. L'attribution de l'identité et de la priorité est faite physiquement pour une configuration de réseau donnée, lors de la connexion de l'appareil correspondant sur le réseau : ceci est donc accompli lors de l'installation de cet appareil, et ne peut être changé à partir du moment où cette configuration est figée. On supposera par la suite, pour la simplicité du raisonnement, que les bus partiels SCSI₁ à SCSI₅ de la figure 2 sont des bus du premier type c'est-à-dire des bus à 8 bits de données. On a donc N = 8 dans ce cas. L'identification de chacun des N appareils est représentée respectivement par les signaux de données 0 à 7 appelés DID₀ à DID₇ avec une priorité ascendante, la plus faible pour DID₀ et la plus forte pour DID₇.

Tout bus partiel est un bus de type SCSI normal conforme au standard sur lequel sont connectés :
- de 1 à N-1 appareils de type SCSI, du type initiateur et/ou de type cible, ou encore du type local et/ou du type distant,
- de 1 à N-1 dispositifs intermédiaires de transmission DIT.

Vis à vis d'un DIT particulier :
- un bus partiel est dit BUS LOCAL si le dispositif intermédiaire de transmission DIT est connecté sans intermédiaire sur celui-ci. Ainsi, pour le dispositif intermédiaire de transmission DIT₁, le bus partiel SCSI₁ est un bus local.
- un bus partiel est dit BUS DISTANT si au moins une liaison point à point LPP sépare le bus partiel et le dispositif intermédiaire de transmission DIT. Ainsi, pour le dispositif DIT₁, l'un quelconque des bus partiels SCSI₂ à SCSI₅ est un BUS DISTANT.

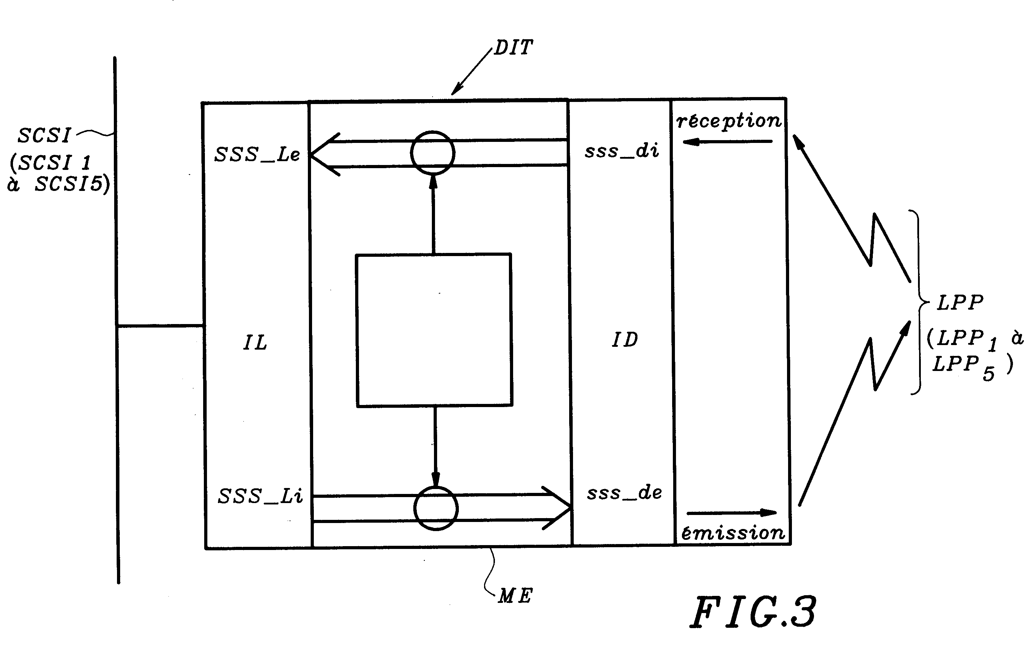

On se reporte à la figure 3 qui montre les éléments constitutifs essentiels d'un dispositif intermédiaire de transmission DIT tel que l'un quelconque des dispositifs intermédiaire de transmission DIT₁ à DIT₃, DIT₅, DIT₆, DIT₁₄ à DIT₃₄ et DIT₅₄ et DIT₆₄ de la figure 2. Ce dispositif intermédiaire de transmission DIT comprend essentiellement une interface distante ID, une interface locale IL, une partie centrale formée par une machine d'état ME. Le DIT comprend, bien entendu, des moyens de mémorisation non représentés pour simplifier, disposés entre IL et ME d'une part, et ID et ME d'autre part, pour les signaux entrant et sortant dans et du DIT.

L'interface locale IL est connectée au bus local SCSI (par exemple l'un des bus partiels SCSI₁ à SCSI₅). L'interface distante ID est connectée à la liaison point à point LPP (une quelconque des liaisons LPP₁ à LPP₅).

L'interface IL est une interface physique de connexion conforme à la norme SCSI alors que l'interface ID est une interface physique de connexion conforme aux règles ou normes d'utilisation habituelles de la liaison correspondante. La machine d'état ME est connectée d'une part à l'interface locale IL et d'autre part à l'interface distante ID. L'ensemble des signaux reçus par l'interface distante ID, au moyen de la liaison LPP est dénommé SSS-di, alors que l'ensemble des signaux qui sont émis par le DIT par l'intermédiaire de cette même interface distante ID vers des bus distants, par l'intermédiaire de LPP est dénommé sss-de. L'ensemble des signaux émis par l'interface locale IL vers le bus partiel SCSI est dénommé SSS-Le. L'ensemble des signaux transmis par l'interface locale IL vers l'interface distante ID, sous le contrôle de la machine d'état ME est appelé SSS-Li. La lettre d signifie distant, la lettre i signifie qu'il s'agit d'une réception, la lettre e d'une émission et la lettre L signifie locale. Les signaux arrivant sur un interface distante ou partant d'une interface distante vers des bus distants sont écrits en lettres minuscules, alors que les signaux arrivant sur ou partant d'une interface locale sont écrits en lettres majuscules. Plus généralement, tous les signaux qui sont sous contrôle de la machine d'état ME sont détaillés dans l'annexe 1.

Le dispositif intermédiaire de transmission DIT a quatre fonctions principales qui sont les suivantes :
a- I'émission ou la réception de signaux vers la liaison LPP, au moyen de l'interface distante ID,
b- la transmission des signaux depuis le bus SCSI local vers la partie émission de la liaison point à point LPP : il s'agit de la transmission de signaux de l'interface locale à l'interface distante symbolisée par la flèche épaisse située en bas de la figure 3 entre les signaux SSS-Li et sss-de,
c- la transmission depuis la partie réception de l'interface distante ID, vers le bus SCSI local : il s'agit de la transmission de l'interface distante à l'interface locale symbolisée par la flèche située en haut de la figure 3 pour les signaux sss-di et SSS-Le,
d- la gestion de prise de contrôle du réseau par l'un des appareils de type SCSI, selon une procédure qui sera décrite plus loin en liaison avec le fonctionnement de la machine d'état ME.

La gestion de prise de contrôle du réseau est effectuée, dans le dispositif intermédiaire de transmission DIT par la machine d'état ME, celle-ci évoluant en fonction de l'état des signaux qui se présentent aussi bien à l'interface locale IL qu'à l'interface distante ID.

Cette gestion de la prise de contrôle du réseau par la machine d'état de l'un quelconque des dispositifs intermédiaire de transmission de la figure 2 est basée sur la règle de l'arbitrage et de la sélection défini dans le standard SCSI à laquelle sont ajoutées certaines propriétés particulières qui sont rendues nécessaires du fait de l'allongement des temps de propagation des signaux dans le réseau dû au fractionnement de la liaison de transmission en plusieurs bus partiels SCSI₁ à SCSI₅.

On sait que, selon la règle de l'arbitrage définie dans la norme SCSI, tout appareil Aᵢ qui veut prendre, à un instant donné, le contrôle du bus auquel il est connecté, s'annonce en activant son signal BUSY (signal qui sera appelé par la suite BSYᵢ-Li) et son signal de donnée d'identification DIDᵢ, pendant un temps défini par la norme en question. Tout appareil connecté au bus qui observe un signal d'identification dont la priorité est supérieure à celle de son propre signal d'identification doit cesser de participer à la phase d'arbitrage en désactivant son signal BSY₁-Li et son signal de donnée d'identification DIDᵢ.

Dans le système d'appareils distribués en réseau selon l'invention, la règle de l'arbitrage définie dans la norme SCSI ne peut s'appliquer sur l'ensemble du réseau, à cause du temps de transmission de signaux émis par un appareil quelconque du réseau vers tout autre appareil connecté sur celui-ci.

Les règles essentielles qui régissent le système selon la présente invention sont les suivantes :
1- l'arbitrage tel qu'il est défini dans la norme SCSI est utilisé localement au niveau de chaque bus de type SCSI partiel : ceci est du au fait qu'on intercale entre ce bus partiel et chaque liaison point à point, le dispositif intermédiaire de transmission DIT, lequel est pourvu d'une intelligence lui permettant de satisfaire aux règles définies par la norme SCSI, intelligence contenue dans la machine d'état.
2- Chaque DIT décèle le début d'une phase d'arbitrage, puis agit sur son interface locale pour neutraliser tout appareil réel SCSI qui voudrait prendre le contrôle du réseau.
3a- Lorsque l'appareil réel SCSI doté de la priorité 7 (la plus élevée selon la norme SCSI) participe à la phase d'arbitrage, il prend malgré cela le contrôle du bus et débute la phase de sélection, en émettant un signal de sélection.
3a1- Chaque DIT qui décèle le début de la phase de sélection, cesse d'agir sur son interface locale et devient neutre vis à vis de la sélection, permettant ainsi la transmission d'une de ses interfaces à l'autre du dit signal de sélection.
3b- Lorsque l'appareil réel SCSI doté de la priorité 7 ne participe pas à la phase d'arbitrage, chaque DIT tout en neutralisant son bus partiel (interdisant à tout appareil le contrôle du bus) propre, observe un délai déterminé pendant lequel il mémorise l'identité des appareils prétendant prendre le contrôle du réseau.
3c- A la fin de celui-ci, seul est libéré l'un des bus partiels du réseau qui a été reconnu comme étant connecté à l'appareil qui participe à la phase d'arbitrage et posséde pendant celle-ci la priorité la plus élevée (différente de 7).
3d- Tout appareil situé sur ce bus partiel peut alors tenter une nouvelle prise de contrôle du bus, qui, lorsqu'elle devient effective, se traduit par la propagation du signal SELECT sur l'ensemble du réseau.

Chaque DIT agit alors comme indiqué en 3a1.

Sur la base des règles énoncées ci-dessus, les grandes lignes générales du fonctionnement du système selon l'invention sont les suivantes :

Pendant la phase d'arbitrage, tout DIT, quel que soit l'endroit où il se situe sur le réseau et quels que soit la situation et le nombre d'appareils participant à la phase d'arbitrage, est capable de prévoir les cas de conflit potentiel ou réel entre ces différents appareils, pour la prise des bus du réseau. Lorsqu'un tel conflit est considéré comme possible, le DIT, après un court délai appelée DELAY₁, neutralise le bus SCSI partiel connecté à son interface locale en se comportant vis à vis de celui-ci comme un appareil virtuel SCSI doté de la priorité la plus élevée : il active alors son signal BUSY et son signal d'identification DID₇. Tous les appareils connectés sur ce bus partiel dotés d'une priorité inférieure à la priorité 7 cessent de participer à l'arbitrage.

Chaque DIT déclenche un second délai DELAY₂, de durée supérieure au temps nécessaire à la stabilisation des signaux sur l'ensemble du réseau.

Pendant la durée totale des deux délais DELAY₁ et DELAY₂, chaque DIT enregistre l'état des lignes de données, sur ses interfaces locale et distante : ceci lui permet, par la suite, de situer où se trouve, par rapport à son interface locale ou par rapport à son interface distante, l'appareil participant à la phase d'arbitrage, qui pendant celle-ci était doté de la priorité la plus élevée.

A ce stade, deux situations peuvent se présenter selon que sur le réseau, l'appareil doté de la priorité 7 la plus élevée est connecté ou non. De plus, s'il est connecté, la question se pose de savoir s'il participe ou non à la phase d'arbitrage.

Dans le cas où l'appareil doté de la priorité la plus élevée participe à la phase d'arbitrage, il prend le contrôle du bus SCSI partiel sur lequel il est connecté (car il ne peut être neutralisé par un DIT en situation d'appareil SCSI virtuel de priorité 7), puis respectant la norme SCSI, il entame la phase de sélection en activant le signal de sélection SEL. Ce signal de sélection se propage dans le réseau et chaque DIT qui observe l'activation du signal de sélection à l'une de ses interfaces en déduit que l'ensemble du réseau est sous le contrôle d'un seul appareil. Il stoppe alors son délai en cours, et cesse de se comporter en appareil SCSI virtuel de priorité 7. Il transmet donc les signaux de l'une de ses interfaces à l'autre.

Si l'appareil doté de la priorité 7 ne participe pas à la phase d'arbitrage, tous les appareils du réseau sont neutralisés par les DIT en situation d'appareils SCSI virtuels de priorité 7. A la fin du second délai DELAY₂, chaque DIT est capable de situer, par rapport à son interface locale ou par rapport à son interface distante, l'endroit où se situe l'appareil doté de la priorité la plus haute (inférieure à 7) qui participe à la phase d'arbitrage, et qui du fait de ce qu'il vient d'être dit plus haut, a été volontairement neutralisé par le DIT connecté au même bus partiel.

Tout DIT qui situe ce même appareil sur son interface distante ne modifie pas son état et maintient neutralisé le bus partiel sur lequel il est connecté. Il attend l'activation du signal de sélection SELECT à son interface distante pour modifier son état.

Au contraire, tout DIT situant ce même appareil sur son interface locale cesse de se comporter en appareil SCSI virtuel de priorité 7. Il libère donc le bus SCSI partiel sur lequel est connecté ce même appareil, doté de la priorité la plus haute, inférieure à 7.

Ce même bus SCSI partiel étant libre, tout appareil connecté sur celui-ci peut participer à une nouvelle phase d'arbitrage. Tous les DIT connectés sur ce même bus partiel restent neutres pendant celle-ci. En cas de conflit entre plusieurs appareils postulant à la prise de contrôle de ce même bus partiel, cette dernière se traite au niveau local, c'est-à-dire au niveau de ce même bus, conformément à ce qui est prévu dans la norme SCSI, puisque en effet, tous les appareils situés sur les autres bus partiels ne peuvent intervenir car ils sont neutralisés par les DIT qui sont restés en situation d'appareils virtuels dotés de la priorité la plus élevée.

Par la suite, l'appareil qui prend le contrôle du bus SCSI partiel, débute la phase de sélection en activant le signal SELECT, lequel se propage sur l'ensemble du réseau. Chaque DIT observe alors l'activation du signal SELECT sur l'une de ses interfaces et en déduit qu'un appareil a pris le contrôle du réseau. Il devient alors neutre vis à vis du bus partiel sur lequel il est connecté et assure le transfert des signaux de données et de contrôle de l'une de ses interfaces à l'autre.

A la fin de la phase de sélection (ou de resélection), chaque DIT est capable de- situer, par rapport à chacune de ses interfaces, l'endroit où se trouvent l'appareil de type initiateur et l'appareil de type cible concernés par les échanges futurs.

Il détermine alors quels sont les sens des transferts à venir et assure les aiguillages internes des signaux qu'il reçoit en fonction, à la fois de la position relative des appareils cités, et des signaux de contrôle gérant ces transferts.

Chaque DIT est capable de déceler le retour à l'état libre de l'ensemble du réseau.

En fonction des grandes lignes de fonctionnement du réseau qui sont définies ci-dessus, la description suivante permettra de mieux comprendre le détail de l'enchaînement des étapes de prise de contrôle du réseau par une machine d'état ME d'un dispositif intermédiaire de transmission DIT.

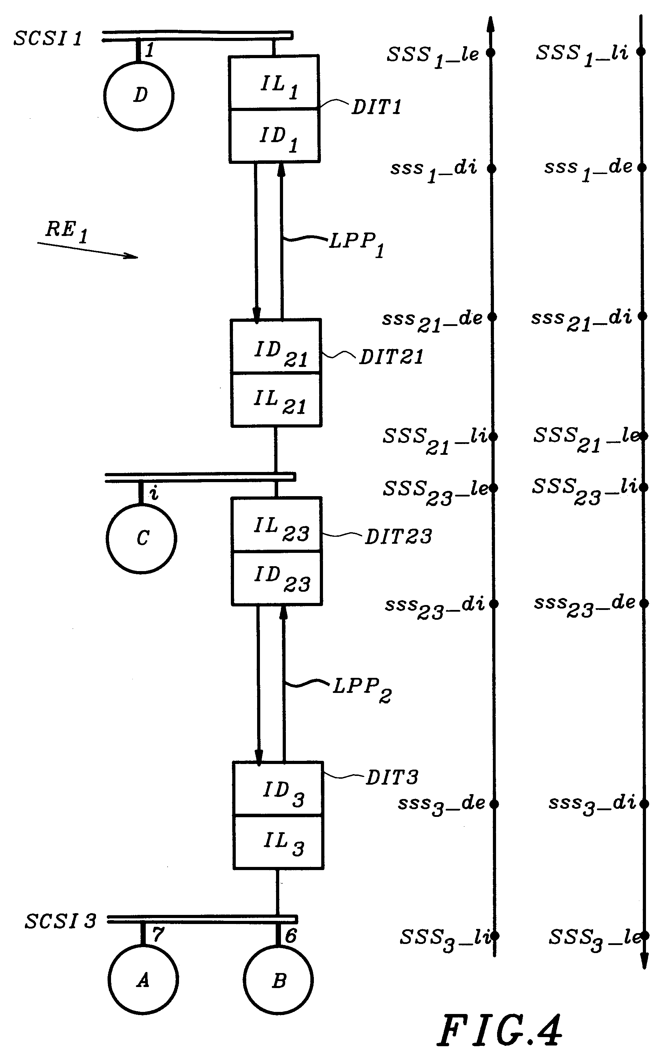

On considérera à cet effet le réseau RE₁ montré à la figure 4, plus simple que le réseau RE de la figure 2 et qui comprend seulement 3 bus partiels SCSI₁ à SCSI₃. Il est clair que l'enchaînement des étapes de prise de contrôle du réseau pour les réseaux RE et RE₁ est de même type.

Au bus partiel SCSI₁ est associé un appareil D d'identification 1, c'est-à-dire de priorité de degré 1 (on rappelle que la priorité 7 est la priorité la plus élevée). La donnée d'identification de l'appareil D est appelée dans la suite DID₁.

Le dispositif intermédiaire de transmission DIT₁ qui comprend une interface locale IL₁ et une interface distante ID₁, est connecté par l'intermédiaire de son interface IL₁ au bus partiel SCSI₁ d'une part, et d'autre part à la liaison point à point LPP₁ par l'intermédiaire de son interface distante ID₁. On suppose que la liaison LPP₁ comprend une liaison pour l'émission et une liaison pour la réception, symbolisées chacune par une flèche à la figure 4.

Le dispositif intermédiaire de transmission DIT₂₁ est connecté d'une part à la liaison LPP₁ et d'autre part au bus partiel SCSI₂. L'interface distante ID₂₁ de ce même dispositif de transmission est connectée à la liaison bidirectionnelle LPP₁ alors que l'interface locale IL₂₁ de ce même dispositif est connecté au bus SCSI₂. A ce dernier est connecté un appareil C d'identification i différente de 1, de 6, de 7. La donnée d'identification de l'appareil C est appelée dans la suite DIDᵢ.

Le dispositif intermédiaire de transmission DIT₂₃ est connecté par l'intermédiaire de son interface locale IL₂₃ au bus partiel SCSI₂, alors qu'il est connecté par l'intermédiaire de son interface distante ID₂₃ à la liaison bidirectionnelle LPP₂ (elle aussi symbolisée à la figure 4 par 2 flèches de sens contraire). A cette dernière est connecté le dispositif intermédiaire de transmission DIT₃ par l'intermédiaire de son interface distante ID₃.

L'interface locale IL₃ de celui-ci est connectée au bus partiel SCSI₃. Les deux appareils, A d'identification 7 et B d'identification 6 sont connectés à ce même bus. Dans la suite de l'exposé, la donnée d'identification de l'appareil A est appelée DID₇ et la donnée d'identification de l'appareil B est appelée DID₆. Dans la partie droite de la figure 4 sont représentées deux flèches de sens opposé indiquant de bas en haut et de haut en bas, respectivement le nom des signaux qui transitent d'un appareil à l'autre depuis le bus partiel SCSI₃ et ses appareils A et B associés jusqu'à l'appareil D connecté au bus SCSI₁ d'une part, et depuis cet appareil D et le bus partiel SCSI₁ jusqu'au bus SCSI₃ et ses appareils associés A et B, d'autre part.

Ainsi, l'ensemble des signaux reçus par IL₃ provenant du bus partiel SCSI₃ est SSS₃-Li, alors que l'ensemble des signaux émis par ID₃ est sss₃-de, l'ensemble des signaux reçu par ID₂₃ étant sss₂₃-di, et ainsi de suite jusqu'au signaux envoyés par l'interface IL₁ vers le bus partiel SCSI₁, dénommé SSS₁-Le. De même l'ensemble des signaux émis par l'appareil D et arrivant sur l'interface IL₁ est SSS₁-Li, l'ensemble des signaux émis par ID₁ étant sss₁-de et ainsi de suite jusqu'à l'ensemble des signaux qui parviennent sur le bus SCSI₃ provenant de l'interface IL₃ et qui est dénommé SSS₃-Le. On se reportera pour plus de détail à la figure 4. Par ailleurs, une identification plus précise des signaux dans le réseau RE₁ de la figure 4 est donné en annexe 2, l'exemple étant donné avec le signal BUSY, dénommé soit BSY, soit bsy suivant que le signal est émis ou reçu par une interface locale ou une interface distante.

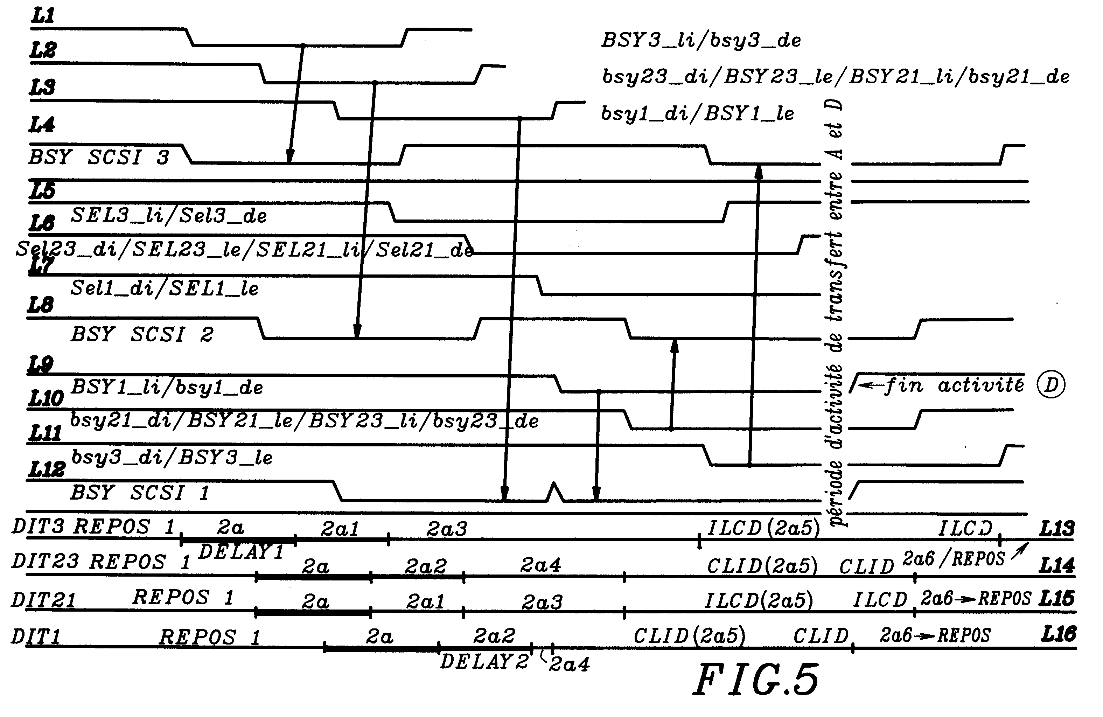

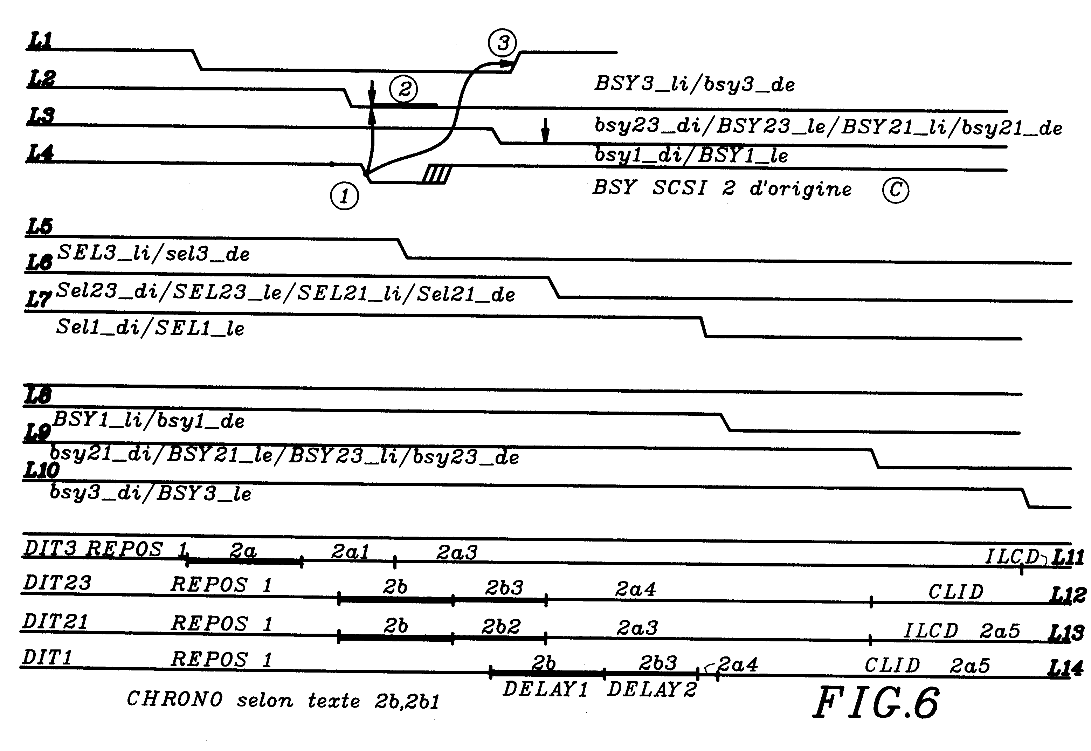

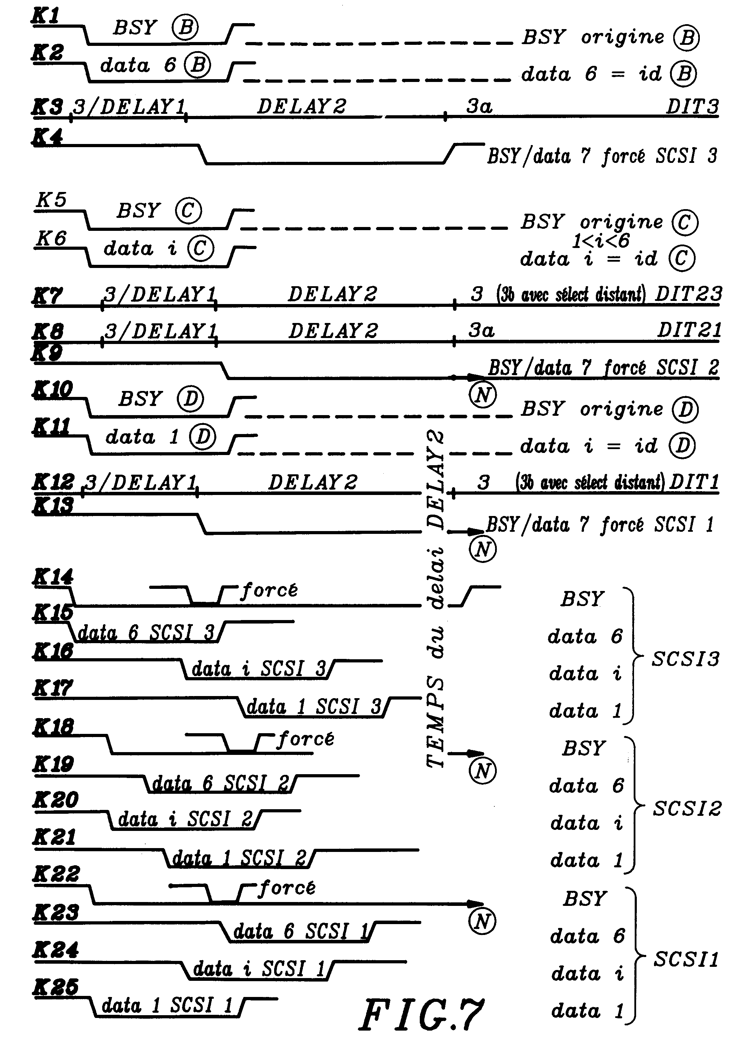

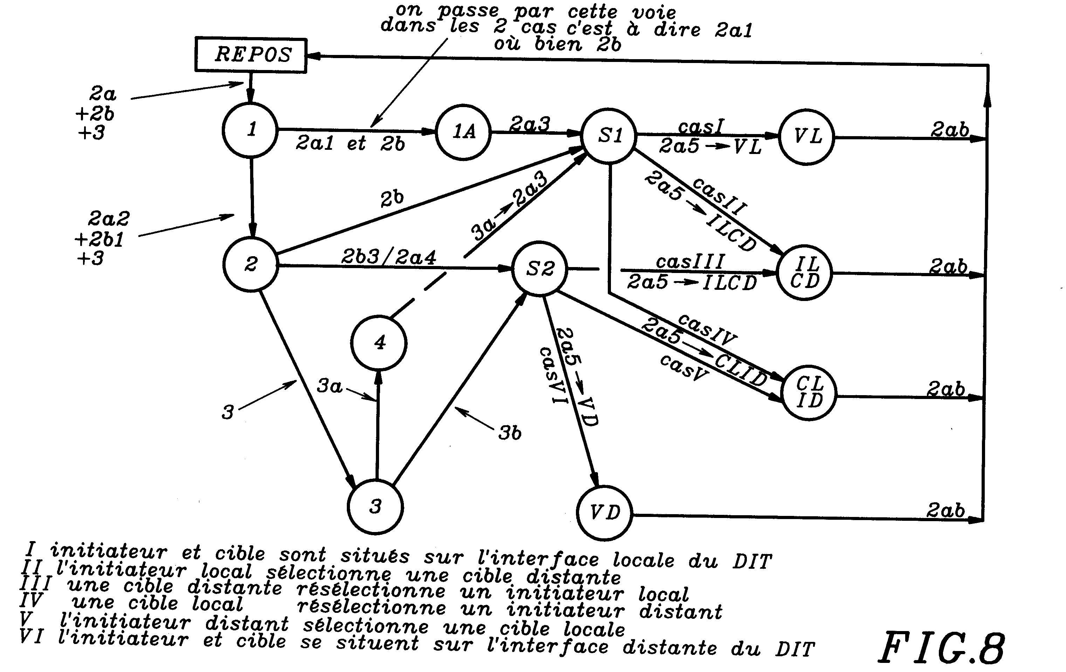

On se réfère désormais aux figures 5 à 8 illustrant l'enchaînement des étapes de prise de contrôle du réseau RE₁ de la figure 4, dans trois cas différents faisant l'objet respectivement des opérations 2a à 2a6 (figure 5 et figure 8), des opérations 2b à 2b3 (figure 6 et figure 8) et enfin des opérations 3a et 3b (figure 7 et figure 8).

On considère donc le premier cas illustré par les figures 5 et 8 qui décrivent l'enchaînement des étapes de prise de contrôle du réseau lorsque un seul appareil, par exemple l'appareil A d'identité 7 (ce qui signifie que cet appareil a la plus haute priorité sur l'ensemble du réseau RE₁) veut travailler avec l'appareil D d'identité 1 (plus faible priorité sur l'ensemble du réseau RE₁).

Un certain nombre d'hypothèses ont été faites pour représenter de manière plus simplifiée le chronogramme de la figure 5 (il en sera évidemment de même pour les chronogrammes représentés aux figures 6 et 7) :
1°) les temps de traversée des dispositifs intermédiaires de transmission par les signaux, sont considérés comme nuls. Ceci permet d'avoir une seule ligne de tracé verticale pour plusieurs signaux, lesquels seraient en réalité décalés les uns par rapport aux autres dans le temps et ceci dans l'ordre où ils figurent sur le chronogramme.
2°) le signal d'identification DID₇ (qui signifie que le signal d'identification DID est égal à 7, indice de plus haute priorité) est supposé accompagner le signal BSY, ce qui a lieu pour les trois premières lignes du tracé L₁ à L₃ (le chronogramme de la figure 5 comporte 16 lignes L₁ à L₁₆ différentes).
   Les signaux DID₇, DID₁ et le bit de parité sont supposés accompagner les signaux de sélection SEL (lignes L₅ à L₇ sur le chronogramme de la figure 5).
   Aucun des signaux d'identification précités ne figurent sur le chronogramme de la figure 5 (il en sera évidemment de même pour les figures 6 et 7) afin de rendre plus claire la compréhension de ce chronogramme.
3°) la période d'activité de transfert des données entre les appareils A et D parait courte sur le chronogramme de la figure 5 (il en est de même pour les chronogrammes des figures 6 et 7) mais dans la réalité cette période d'activité est très supérieure au temps nécessaire à l'arbitrage et à la sélection.
4°) Le chronogramme de la figure 5 (des figures 6 et 7) ne prétend pas représenter le diagramme de temps (le timing) exact du standard SCSI, mais a seulement pour but de donner un aperçu pédagogique d'un enchaînement des différentes opération d'arbitrage, de sélection, de transfert, et de retour à l'état de repos.

Les opérations de prise de contrôle sont les suivantes :

1- le réseau est tout d'abord libre : il n'y a pas d'activité. Chaque dispositif intermédiaire de transition observe le signal BUSY (soit BSY, soit bsy) inactif sur ses deux interfaces, aussi bien la locale que la distante.

2a- l'appareil A d'identité 7 active son signal BUSY pour arbitrer : on désigne sous ce vocable, l'action qui consiste à intervenir pour prendre possession du réseau RE₁ et envoyer des signaux sur celui-ci ou en recevoir. Ce signal BUSY est représenté à la ligne L₁ et a pour nom BSY₃-Li.

L₄ représente le signal BSY sur le bus SCSI₃, c'est à la fois le signal BSY₃-Li, et le signal BSY₃-de, c'est-à-dire qu'il représente le signal BUSY sur les deux interfaces IL₃ et ID₃ du dispositif intermédiaire de transition DIT₃. De manière générale, tous les signaux représentés aux lignes L₁ à L₁₂ de la figure 5 obéissent au système de représentation qui a été défini à la figure 4 et dans l'annexe 2. Ainsi, la ligne L₁ représente les signaux aux interfaces IL₃ et ID₃ du dispositif de transmission DIT₃, la ligne L₂ les signaux aux interfaces IL₂₃ et ID₂₃, IL₂₁ et ID₂₁ des dispositifs intermédiaires de transition DIT₂₃ et DIT₂₁, la ligne L₃ les signaux aux interfaces IL₁ et ID₁ du dispositif intermédiaire de transition DIT₁, la ligne L₄ le signal BUSY sur le bus SCSI₃, la ligne L₅ les signaux de sélection aux interfaces locale et distante du dispositif intermédiaire de transition DIT₃, la ligne L₆ les signaux de sélection aux interfaces locale et distante des dispositifs intermédiaires de transition DIT₂₃ et DIT₂₁, la ligne L₇ les signaux de sélection aux interfaces locale et distante du dispositif intermédiaire de transition DIT₁, la ligne L₈ le signal BUSY sur le bus SCSI₂, et les lignes L₉ à L₁₁ les signaux de type BUSY sur les interfaces locale et distante des dispositifs de transmission DIT₃, DIT₂₃, DIT₂₁, DIT₁, la ligne L₁₂ le signal BUSY sur le bus SCSI₁. Les flèches qui relient les lignes L₁ et L₄, L₂ et L₈, L₃ et L₁₂ signifient que les signaux représentés sur ces lignes sont identiques. Il en est évidemment de même pour les lignes L₉ et L₁₂, L₁₀ et L₈, L₁₁ et L₄.

Dès que l'appareil A a activé son signal BUSY, le dispositif intermédiaire de transmission qui en est le plus proche, ici le dispositif DIT₃ observe le signal de type BUSY de son interface locale IL₃ devenir actif (ligne L₁). Il transmet celui-ci sur son interface distante ID₃ tout en déclenchant le début du délai DELAY₁ qui est de l'ordre de la microseconde (ce délai est un délai interne au dispositif interne de transmission) et il autorise en même temps la mémorisation de l'état des signaux de données sur ses deux interfaces. Le signal de type BUSY émis par l'appareil A est transmis de proche en proche à l'ensemble du réseau.

Au niveau de chaque dispositif intermédiaire de transmission, ce signal arrive soit sur l'interface distante, soit sur l'interface locale. Ainsi, sur DIT₂₃, le signal arrive sur l'interface distante, alors que pour DIT₂₁ il arrive sur l'interface locale et que pour DIT₁, il arrive sur l'interface distante. Chaque dispositif intermédiaire de transmission observe le signal BUSY de l'une de ses interfaces devenir actif, le transmet sur l'autre, déclenche son propre DELAY₁ et autorise le mémorisation des signaux de données de ses deux interfaces. Ceci est illustré par les lignes L₁ à L₃, L₉ à L₁₁ et par les lignes L₄, L₈, L₁₂. Après un temps qui dépend des caractéristiques physiques du réseau, le signal BUSY est à l'état actif sur chacun des bus partiels SCSI₁ à SCSI₃ (voir lignes L₄, L₈, L₁₂).

A la fin du DELAY₁, et ce dans chacun des dispositifs intermédiaires de transmission qui ont détecté l'activation de BSY-Li sur leur interface locale IL, on passe de l'étape 2a à l'étape 2a1 et la machine d'état passe de l'état 1 à l'état 1A, lignes L₁₃ et L₁₅ de la figure 5.

A la fin du DELAY1 et ce dans chacun des DIT qui ont détecté l'activation de bsy-di sur leur interface distante ID on passe de l'étape 2a à 2a2 et la machine d'état passe de l'état 1 à l'état 2, lignes L₁₄ et L₁₆ de la figure 5.
2a1- Lors de cette opération, tous les dispositifs intermédiaires de transmission DIT qui ont détecté l'activation du signal BUSY sur leur interface locale et qui ont mémorisé le seul signal de données DID₇ actif, se mettent en attente du signal de sélection SEL sur leur interface locale, comme il est prévu dans la norme SCSI. Leur machine d'état est alors dans l'état 1A, lignes L₁₃ et L₁₅ de la figure 5.
2a2- Lors de cette opération, tous les dispositifs intermédiaires de transmission qui ont détecté l'activation du signal BUSY sur leur interface distante (dispositif DIT₂₃ et DIT₁) déclenchent un délai appelé DELAY₂ et continuent la mémorisation des signaux de données de leur deux interfaces respectives, lignes L₁₄ et L₁₆ de la figure 5. En plus, chacun se comporte vis à vis de son bus local (ici SCSI₂ et SCSI₁) comme un appareil normal de type SCSI d'identité 7, et ce en activant le signal BUSY et le signal de données d'identité 7, (c'est-à-dire de la plus haute priorité) sur ce même bus. Cette dernière action permet de refuser temporairement la prise de contrôle de ces bus locaux (SCSI₂ et SCSI₁) de la part de tout appareil demandeur potentiel sur ces mêmes bus. (appareils autre que A). le délai DELAY₂ a une durée supérieure, dans l'exemple de réalisation décrit ici, à deux fois le temps que mettent les signaux pour parcourir le chemin le plus lent entre deux appareils situés sur des bus partiels distincts l'un de l'autre. Lors de cette opération 2a2, la machine d'état des dispositifs intermédiaire de transmission impliqués par cette opération est dans l'état 2.
2a3- A la fin de la phase d'arbitrage, c'est-à-dire à la fin de l'opération 2a1, définie dans le standard SCSI, l'appareil A active son signal de sélection SEL (ligne L₅). Le dispositif intermédiaire de transmission DIT₃ détecte en premier le signal de sélection, ici SEL₃-Li sur son interface locale IL₃. Il le transmet sur son interface distante ID₃ ainsi que des signaux de données et de parité associées (signal DID₇, plus DID₁, signal d'identification de l'appareil cible, à savoir l'appareil D, plus bit de parité associé à la configuration des 8 bits de données).
   Il attend alors la désactivation du signal BUSY sur le bus local SCSI₃ puis, soit sa réactivation (on observe à la figure 5 que le signal BUSY local, représenté à la ligne L₄ est actif une première fois puis actif une seconde fois vers la partie droite de la figure) soit l'activation du signal BUSY distant (pouvant être envoyé par exemple par l'appareil D). Le signal de sélection SEL est alors transmis de proche en proche à l'ensemble du réseau RE₁ jusqu'à l'appareil D. Les dispositifs intermédiaires de transmission qui observent l'activation de leur signal de sélection SEL sur l'interface locale, comme DIT₃ et DIT₂₁, opèrent de la même manière.
   Leur machine d'état se trouve dans l'état S₁, lignes L₁₃ et L₁₅ de la figure 5.
2a4- Lors de cette opération, les dispositifs intermédiaires de transmission qui observent l'activation de leur signal de sélection SEL sur leur interface distante (ici DIT₂₃ et DIT₁) stoppent le DELAY₂ en cours. lls cessent de se comporter en appareil SCSI d'identité 7. lls transmettent le signal de sélection, les signaux de données et de parité associés de leur interface distante à leur interface locale. lls attendent alors la désactivation de leur signal BUSY distant, puis sa réactivation éventuelle ou l'activation de leur signal BUSY local. Leur machine d'état se trouve dans l'état S₂, lignes L₁₄ et L₁₆ de la figure 5.
2a5- Lors de cette opération, l'appareil A désactive son signal BUSY après avoir activé son signal de sélection SEL : on peut se référer par exemple aux lignes L₁ et L₅ où l'on voit que le signal de sélection SEL₃-Li est activé peu de temps avant que le signal montré à la ligne L₁, à savoir BSY-Li, ne soit désactivé. Ceci est d'ailleurs prévu par le standard SCSI.

L'appareil D que veut sélectionner A se reconnait sollicité par ce dernier, lorsqu'il observe simultanément que le signal de sélection et le signal de données porteur de son identité propre, c'est à dire DID₁ sont actifs (il s'agit ici du signal SEL₁-Le). Il doit observer également en même temps le signal de données porteur de l'identité de A c'est-à-dire DID₇. Il active ensuite à son tour son propre signal BUSY, c'est-à-dire le signal BSY-Li montré à la ligne L9. Ce dernier est transmis à l'ensemble du réseau RE₁ par l'intermédiaire de tous les dispositifs de transmission et les lignes point à point présentes à la figure 4. Chaque dispositif intermédiaire de transmission compare respectivement l'origine du signal de sélection et du dernier signal de type BUSY activé.

Si les origines de ces deux derniers sont identiques, c'est-à-dire proviennent de la même interface locale ou distante, le dispositif DIT en question en déduit qu'il n'est pas concerné par l'activité future de A sur son bus partiel SCSI₃ et que les transferts de données à venir ne le concernent pas. Son rôle se limite alors au transfert du signal BUSY de l'une de ses interfaces à l'autre. Dans ce cas, la machine d'état du dispositif intermédiaire de transmission passe de l'état S₁ à l'état VL qui signifie que l'appareil initiateur, ici A, et la cible ici B sont connectés à une même interface locale de dispositif intermédiaire de transmission, ici IL₃ connectée au bus partiel SCSI₃. Dans ce cas on se situe dans le cas I montré à la figure 8.

Si les origines du signal de sélection et du dernier BUSY activés sont opposés alors on se trouve dans l'un des cas II à V suivants (montrés à la figure 8):
II. L'appareil initiateur local, en l'occurrence A sélectionne une cible distante : la machine d'état du dispositif intermédiaire de transmission passe alors de l'état S₁ à l'état ILCD qui signifie initiateur local-cible distante, lignes L₁₃ et L₁₅ de la figure 5.
III. Une cible distante resélectionne un initiateur local, en l'occurrence A. le dispositif intermédiaire de transmission voit sa machine d'état passer de l'état S₂ à l'état ILCD.
IV. Une cible locale resélectionne un initiateur distant la machine d'état du dispositif intermédiaire de transmission passe de l'état S₁ à l'état CLID qui signifie cible locale-initiateur distant.
V. L'initiateur distant sélectionne une cible locale : la machine d'état du DIT passe de l'état S₂ à l'état CLID, lignes L₁₄ et L₁₆ de la figure 5.
   Dans les cas II à V, le rôle du DIT consiste ensuite, une fois qu'il est dans l'état ILCD ou CLID à assurer le transfert de l'ensemble des signaux dans le sens convenable prévu par le protocole du standard SCSI.
VI. Si les origines du signal de sélection et du dernier BUSY activé sont identiques, c'est-à-dire proviennent de la même interface distante du dispositif intermédiaire de transmission, la machine d'état de ce dernier passe de l'état S₂ à l'état VD.

2a6- Lors de cette opération, chaque dispositif DIT observe continuellement l'état du signal BUSY qu'il reçoit. Si celui-ci est désactivé, le DIT en déduit que l'activité qui était en cours se termine. Il positionne alors à l'état repos ses propres indicateurs et est prêt pour participer de nouveau à la gestion de la prise de contrôle du réseau grâce à une future sollicitation de l'un quelconque des appareils de ce dernier. On voit ainsi, en se reportant à la figure 8 que lors de cette opération 2a6, on passe de l'un des états VL, ILCD, CLID ou VD à l'état initial de repos.

On considère le second cas de prise de contrôle du réseau, dans le cas où plusieurs appareils participent à l'arbitrage en quasisimultanéité, en supposant que parmi ces appareils il y a l'appareil A d'identité 7 comme dans l'ensemble des opérations de 2a1 à 2a6.

On se reporte alors à l'examen des figures 6 et 8 étant entendu que la figure 6 doit être examinée conjointement avec la figure 5.

Chaque appareil qui participe à l'arbitrage, active son propre signal BUSY dans le temps prévu par le protocole SCSI par rapport à l'état libre du bus partiel où il est connecté. Chaque DIT observe l'activation du signal BUSY sur ses deux interfaces. Il en assure la transmission selon une règle de priorité (le premier signal BUSY qui lui parvient est transmis, alors que le second ne l'est pas ou ne l'est qu'ensuite). Il déclenche son propre DELAY₁ et autorise la mémorisation interne des signaux de données de ses deux interfaces.

Pour mieux comprendre comment se déroule les différentes opérations dans ce deuxième type de situation, on suppose que ce sont les appareils A et C qui participent à l'arbitrage. on suppose que A est prioritaire avec DID₇ actif. Pour sa part, l'appareil C a un bit d'identification d'indice i inférieur à 7. L'appareil A arbitre en premier et il cible l'appareil D dont l'identificateur est DID₁. L'appareil C ayant trouvé le bus SCSI₂ libre en E₁ (voir ligne L4 à la figure 6) tente l'arbitrage. Le bit de données DIDi qui lui donne son identification se propage vers l'un et l'autre des deux bus partiels SCSI₁ et SCSI₃ qu'il atteint en E₃ (ligne L₁ à la figure 6). L'appareil C ayant un degré de priorité inférieur à l'appareil A, perd l'arbitrage et désactive son signal BUSY et sa donnée d'identification DIDᵢ. Cependant, celle-ci est mémorisée dans les trois dispositifs DIT₂₃, DIT₂₁ et DIT₁.

Les différents dispositifs de transmission se comportent alors de la manière suivante :

2b- Tout DIT qui termine le DELAY₁ en ayant seulement observé la donnée d'identification DID₇ devenir active sur son interface locale IL se trouve être dans la situation définie en 2a1.

Dans l'exemple considéré selon les figures 4 et 6 seul le DIT₃ est dans ce cas : il a déclenché le DELAY₁ lors de l'activation de la donnée d'identification DID₇ sur son interface locale IL₃ et a terminé le DELAY₁ avant d'avoir observé l'activation de la donnée d'identification didi sur son interface distante ID₃, ligne L₁₁ figure 6.

L'observation ultérieure de l'activation de la donnée d'identification didi sur son interface distante ID₃ est sans effet dès l'instant que la machine d'état est dans l'état 1A.

Par la suite l'appareil A ayant pris le contrôle du bus local SCSI₃ (A est le plus prioritaire) active le signal SELECT en l'occurrence ici le signal SEL₃-Li ainsi que les signaux de donnée d'identification DID₇ (le sien propre) et DID₁ (celui de l'appareil ciblé). L'activation de SEL₃-Li observé par le DIT₃ provoque dans ce dernier l'évolution de la machine d'état qui passe de l'état 1A à l'état S1 selon la situation définie en 2a3, lignes L₅ et L₁₁ figure 6.

2b1- Tout DIT qui termine le DELAY₁, en ayant observé l'activation de plus d'un signal de donnée d'identification sur son interface locale IL, ou bien ayant observé l'activation de au moins un signal de donnée d'identification sur son interface distante ID, déclenche son DELAY2 et sa machine d'état passe de l'état 1 à l'état 2.

Pendant le temps d'activation du DELAY₂, la mémorisation des signaux de données d'identification des interfaces, locale et distante, est maintenue.

Le DIT₂₁ est dans le premier cas cité puisque à la fin du DELAY₁ il a observé l'activation des signaux de donnée d'identification DID₇ et DIDᵢ sur son interface locale, ligne L₁₃ figure 6.

Le DIT₂₃ et le DIT₁ sont dans le second cas cité puisque à la fin de leur DELAY₁ respectif : le DIT₂₃ a observé l'activation de la donnée d'identification did7 sur son interface distante ID₂₃, ligne L₁₂ figure 6 et le DIT₁ a observé l'activation de la donnée d'identification did₇ ou didᵢ, ou les deux sur son interface distante ID₁, ligne L₁₄ figure 6.

Le signal SELECT et les signaux de donnée d'identification DID₇ et DIDᵢ activés par l'appareil se propagent dans le réseau.

2b2- Tout DIT dont la machine d'état est dans l'état 2 et qui observe l'activation du signal SELECT sur son interface locale fait évoluer sa machine d'état de l'état 2 à l'état S1.

En outre il assure la transmission du signal SELECT et des signaux d'identification DID₇ et DIDᵢ de son interface locale IL vers son interface distante ID.

Dans l'exemple considéré selon figures 4 et 6 le DIT21 est dans le cas cité ci-dessus. Il observe l'activation du signal SEL₂₁-Li sur son interface locale IL₂₁, lignes L₆ et L₁₃ figure 6.

2b3- Tout DIT dont la machine d'état est dans l'état 2 et qui observe l'activation du signal SELECT sur son interface distante ID fait évoluer sa machine d'état de l'état 2 à l'état S2.

En outre, il assure la transmission du signal SELECT et des signaux de donnée d'identification did₇ et didi de son interface distante vers son interface locale IL.

Dans l'exemple considéré selon la figure 4 et 6, le DIT₂₃ et le DIT₁ sont dans ce cas. lls observent l'activation du signal SELECT sur leur interface distante, respectivement Sel₂₃-di pour DIT₂₃ et Sel₁-di pour DIT₁, figure 6 lignes L₁₂ et L₆ pour DIT₂₃, figure 6 lignes L₁₄ et L₇ pour DIT₁.

L'appareil A conformément au protocole SCSI maintient actif SEL₃-Li, DID₇ et DID₁ et a désactivé BSY₃-Li. Il attend la réponse de l'appareil ciblé, lequel doit activer BSY₁-Li.

L'appareil ciblé se reconnaît sélectionne et active le signal BSY₁-Li qui se propage dans le réseau. Les différents DIT du réseau évoluent conformément aux situations décrites en 2a5.

3- On se reporte désormais à la figure 7 et à la figure 8 et on considère le troisième cas de prise de contrôle du réseau où l'arbitrage est tenté par un ou plusieurs appareils de priorité inférieure à la priorité 7 la plus élevée.

Chaque dispositif de transmission déclenche DELAY₁, dès la détection du signal BUSY présent à l'une de ses interfaces. Il transmet ce dernier sur son autre interface. Il autorise la mémorisation des signaux de données de celle-ci. A la fin de DELAY₁, il déclenche DELAY₂, maintient l'autorisation de mémorisation des signaux de données puis active les signaux BUSY et de données 7 sur son interface locale dans le but de faire perdre la prise de contrôle du réseau à tout appareil se situant sur le bus associé à cette interface locale.

A l'expiration de DELAY₂, chaque dispositif de transmission compare les signaux de données de ses deux interfaces (mémorisés pendant les DELAY₁ et DELAY₂). Il détermine à quelle interface, locale ou distante, appartient l'appareil associé au signal de données d'identité la plus prioritaire qui a été actif pendant l'un ou l'autre de ces deux délais. Lors de ce troisième cas, la machine d'état des dispositifs de transmission passe de l'état 2 à l'état 3 (voir figure 8).
3a- Si l'appareil associé au signal de données d'identité la plus prioritaire est situé sur le bus local, tout dispositif de transmission situé sur ce bus local cesse de se comporter en appareil d'identité la plus haute vis à vis de son propre bus local. Ce dernier devient libre. L'un quelconque des appareils situés sur ce bus peut également arbitrer. L'appareil qui a pris le contrôle du bus local active son signal de sélection. Les opérations pour ce dispositif de transmission s'enchaînent comme indiqué pour le dispositif DIT₃ au paragraphe 2a3. La machine d'état de ce dispositif de transmission passe donc de l'état 3 à l'état 4, puis à l'état S₁.
3b- L'appareil d'identité la plus élevée est situé sur l'un des bus distants : le DIT correspondant cesse la mémorisation des signaux de données. Il maintient actif le signal BUSY sur son interface locale puis se met en attente du signal de sélection sur son interface distante. Lorsqu'il observe le signal de sélection distant actif, il opère comme indiqué au paragraphe 2a4.

Pour mieux comprendre les opérations 3a et 3b évoquées ci-dessus, on considère l'exemple plus détaillé suivant où trois appareils tentent l'arbitrage, aucun d'eux n'ayant l'identification de priorité la plus élevée dans le réseau. Ces appareils sont par exemple l'appareil B (voir figure 4) d'identification 6, l'appareil C d'identification i avec i compris en 1 et 6 et enfin l'appareil D d'identification 1. L'appareil ciblé est par exemple l'appareil A d'identification 7. Le comportement des différents dispositifs de transmission DIT, à la fin de leur délais DELAY₂ respectifs est le suivant et on se reporte à la figure 7 qui comprend les lignes k₁ à k₂₅.

Le dispositif de transmission DIT₃ mémorise les signaux de données d'identification 6 sur son interface locale et de données d'identification i et 1 sur son interface distante. L'identification de l'appareil local correspondant (B) étant égale à 6 et supérieure à i, identification des appareils distants, son comportement est celui de l'étape 3a, ainsi qu'on peut le voir à la ligne k₃.

Le dispositif DIT₂₃ mémorise le signal d'identification 6 sur son interface distante et les signaux d'identification i et 1 sur son interface locale.

L'identification de l'appareil distant étant supérieur à l'identification i ou 1 des appareils connectés sur son bus local associé, il se comporte suivant 3b (voir ligne k₇ à la figure 7).

Le dispositif de transmission DIT₂₁ mémorise les signaux d'identification 6 et i sur son interface locale et le signal d'identification 1 sur son interface distante. Son identification de l'appareil local étant égale à 6, et supérieure à l'identification de l'appareil distant 1, il se comporte suivant 3a, voir ligne k₈ à la figure 7.

Le dispositif de transmission DIT₁ mémorise les signaux d'identification 6 et i sur son interface distante et d'identification 1 sur son interface locale.

L'identification 6 de l'appareil distant étant supérieur à l'identification 1 de son appareil local, il se comporte suivant 3b. (ligne k₁₂ à la figure 7).

On notera, qu'à la fin de leur DELAY₂ respectif, les dispositifs de transmission DIT₃ et DIT₂₁ suppriment le forçage de leurs signaux BSY et DID₇ respectifs, mais seul le bus partiel SCSI₃ est libéré car le bus SCSI₂ est lui-même occupé par le dispositif de transmission DIT₂₃. Le seul bus partiel libéré est donc bien celui sur lequel est connecté l'appareil d'identification la plus élevée parmi l'ensemble des appareils qui ont tenté d'arbitrage. La figure 7 se limite à montrer les signaux lors de la phase d'arbitrage, car la phase de sélection qui suit est identique à celle qui s'opère à la suite d'une sélection unique, comme il est indiqué aux figures 5 et 6.

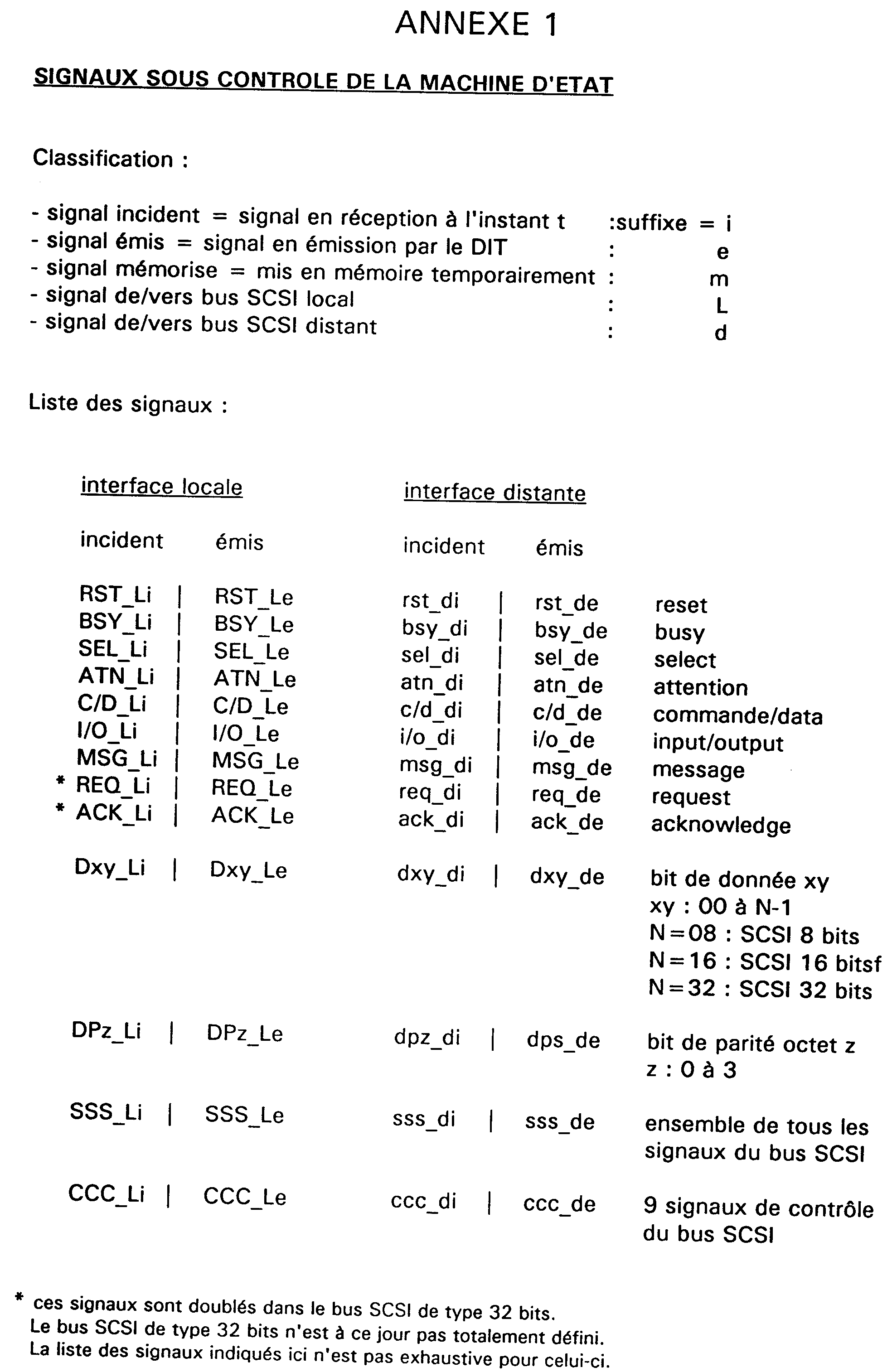

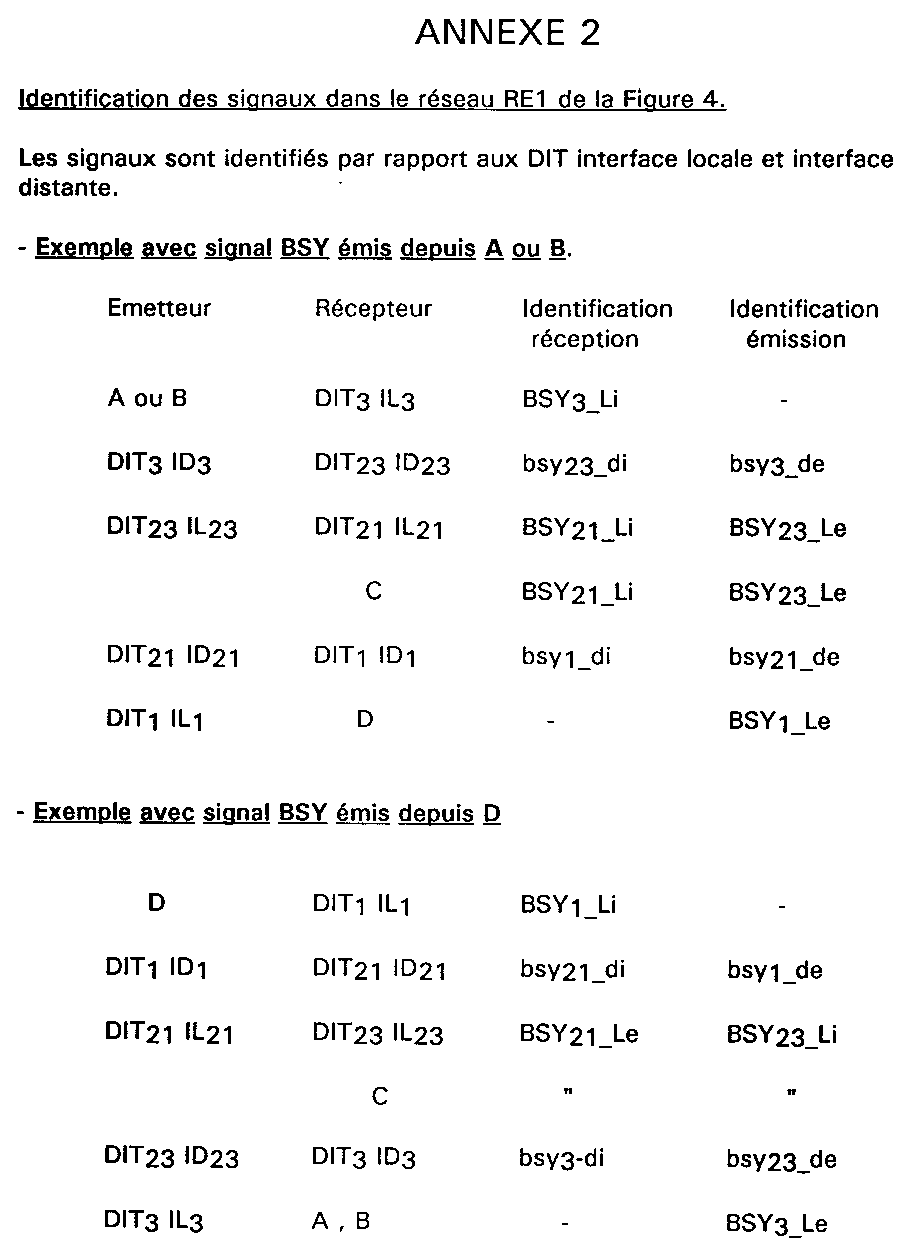

## Revendications

1. Système d'au maximum N appareils (A, B, C, D,...) distribués en réseau (RE) fonctionnant selon un protocole déterminé (SCSI) où la longueur de tout bus assurant la connexion de plusieurs appareils entre eux (SCSI₁, SCSI₂, SCSI₃) a une valeur maximale donnée, caractérisé en ce que, la distance entre les appareils étant supérieure à la valeur maximale, il comprend une pluralité de bus partiels locaux (SCSI₁ à SCSI₃) reliés entre eux par des liaisons bidirectionnelles (LPP₁, LPP₂) point à point et gérés par des dispositifs intermédiaires de transmission (DIT₁, DIT₂₁, DIT₂₃, DIT₃) dont chacun est connecté d'une part à un bus partiel et d'autre part à une liaison point à point et intervient dans les phases de prise de contrôle du réseau par tout appareil connecté à l'un quelconque des bus partiels et qui est affecté d'un degré de priorité déterminé pour la prise de contrôle du réseau.

2. Système selon la revendication 1 dans lequel tout dispositif de transmission (DIT₁, DIT₂₁, etc...) comprend une première interface (IL) de connexion avec son bus partiel associé, une seconde interface (ID) de connexion avec la liaison (LPP) bidirectionnelle associée, une partie centrale (RE) gérant les transferts de données du bus partiel vers la liaison et vice versa, caractérisé en ce que chaque bus partiel (SCSI₁, SCSI₂, etc...) fonctionnant suivant la norme SCSI, la partie centrale est une machine d'état assurant la gestion de la prise de contrôle du réseau (RE, RE₁) par tout appareil (A, B, C, D,...) appartenant à celui-ci en fonction de l'état des signaux apparaissant sur la première et la seconde interface (IL, ID).

3. Système selon la revendication 2, caractérisé en ce que l'arbitrage défini dans la norme SCSI est utilisé localement par toute machine d'état (ME) au niveau du bus partiel associé (SCSI₁, SCSI₂,...) au dispositif intermédiaire de transmission (DIT₁, DIT₂₁, DIT₂₃, DIT₃) correspondant, ce dernier étant un appareil SCSI virtuel doté de la priorité la plus élevée sur son propre bus partiel associé, lors des phases d'arbitrage et de sélection définies dans la norme SCSI.

4. Système suivant la revendication 3, caractérisé en ce que la machine d'état (ME) comprend des moyens de détection du début d'une phase d'arbitrage et des moyens de neutralisation agissant sur la première interface de connexion pour neutraliser tout appareil connecté sur le bus partiel associé au cas où ce dernier veut prendre le contrôle du réseau, dès que les moyens de détection ont décelé le début d'une phase d'arbitrage.

5. Système selon la revendication 4, dans lequel tout appareil doté de la priorité la plus élevée comprend des moyens pour émettre un signal de sélection, dès que, participant à la phase d'arbitrage, il a pris le contrôle d bus sur lequel il est connecté, caractérisé en ce que la machine d'état comprend des moyens de détection du signal de sélection pour libérer la première interface et transmettre le signal de sélection vers la seconde interface.

6. Système suivant la revendication 4, caractérisé en ce que la machine d'état comprend des moyens pour mémoriser, pendant un délai déterminé, le degré de priorité des appareils prétendant prendre le contrôle du réseau.

7. Procédé de mise en oeuvre du système selon la revendication 3, caractérisé en ce que, la règle d'arbitrage définie dans la norme SCSI étant utilisée localement au niveau de chaque bus partiel,
1.Chaque dispositif intermédiaire de transmission décèle le début d'une phase d'arbitrage, puis agit sur son interface locale pour neutraliser tout appareil SCSI qui voudrait prendre le contrôle du réseau,
2a. Lorsque l'appareil doté de la priorité la plus élevée (priorité 7), participe à la phase d'arbitrage, il prend le contrôle du bus partiel auquel il est connecté et débute la phase de sélection en émettant son propre signal de sélection,
2a1. Chaque dispositif intermédiaire de transmission qui décèle le début de la phase de sélection cesse d'agir sur son interface locale et devient neutre vis à vis de la phase de sélection, c'est-à-dire qu'il permet la transmission de tous les signaux de sa première à sa deuxième interface et vice versa.

8. Procédé selon la revendication 7, caractérisé en ce que :
2b. Lorsque l'appareil doté de la priorité la plus élevée ne participe pas à la phase d'arbitrage, chaque dispositif intermédiaire de transmission neutralise son bus partiel associé (interdisant à tout appareil le contrôle du bus correspondant), et observe un délai déterminé (DELAY₁) pendant lequel il mémorise l'identité des appareils qui cherchent à prendre le contrôle du réseau.
2c. A la fin de ce délai, le bus partiel du réseau qui a été reconnu comme étant connecté à l'appareil qui participe à la phase d'arbitrage et qui possède pendant celle-ci la priorité la plus élevée, est libéré par le dispositif intermédiaire de transmission qui lui est associé,
2d- Tout appareil situé sur le bus partiel libéré peut alors tenter la prise de contrôle de ce bus, qui lorsqu'elle devient effective, se traduit par la propagation du signal de sélection émis par cet appareil sur l'ensemble du réseau, chaque dispositif intermédiaire de transmission agissant alors comme indiqué lors de la phase 2a1.
